# EUROPEAN PATENT SPECIFICATION

(11) **EP 3 615 805 B1**
(45) Date of publication and mention of the grant of the patent: **07.06.2023**
(21) Application number: 18791748.9
(22) Date of filing: 25.04.2018
(51) Int. Cl.: F04B 41/06, F04C 28/02, F04B 49/22, F04C 23/00, F04C 28/24, F04D 27/02

(54) **GAS PROCESSING AND MANAGEMENT SYSTEM FOR SWITCHING BETWEEN OPERATING MODES**
GASVERARBEITUNGS- UND VERWALTUNGSSYSTEM ZUM UMSCHALTEN ZWISCHEN BETRIEBSARTEN
SYSTÈME DE TRAITEMENT ET DE GESTION DE GAZ DE COMMUTATION ENTRE DES MODES DE FONCTIONNEMENT

(30) Priority: 28.04.2017 US 201762491729 P
(43) Date of publication of application: 04.03.2020
(73) Proprietor: Atlas Copco Comptec, LLC, Voorheesville, New York 12186 (US)
(72) Inventor: GIBBS, Todd Steven Abbot, Voorheesville, New York 12186 (US)
(74) Representative: Van Minnebruggen, Ewan Benito Agnes
(86) International application number: PCT/US2018/029260
(87) International publication number: WO 2018/200610

(56) References cited:
- WO-A1-2017/215992
- WO-A2-2012/058069
- JP-A- S61 149 597
- US-A1- 2004 079 392
- US-A1- 2009 272 264
- US-A1- 2012 121 450
- US-A1- 2012 261 092
- US-A1- 2014 007 616

## Description

### TECHNICAL FIELD

The following relates to embodiments of a gas processing and management system for switching between operating modes.

### BACKGROUND

Natural gas streams are processed for ethane recovery and ethane rejection at different operating modes. Currently, different compressors may be required to switch between ethane recovery and ethane rejection modes. To accomplish the switch between rejection and recovery, two independent compressor are used or the existing compressor must be completely or partially disassembled, and outfitted with the equipment necessary for recovery or rejection.

Thus, there is a need for a single compressor unit that can effectively switch between recovery and rejection modes. US 2004/079392 A1 and WO 2012/058069 A2 both disclosed the preamble of claim 1.

### SUMMARY

An aspect relates to a multi-stage compressor, comprising: a first compressor section, and a second compressor section, an inlet receiving a stream of gas containing an ethane gas; a second line or conduit fluidically connected to the inlet, the second line or conduit extending from the inlet to the first compression section of the multi-stage compressor, the second line or conduit extending from the first compression section of the multi-stage compressor to an outlet; a first line or conduit fluidically connected to the inlet, the first line or conduit extending from the inlet to the second compression section of the multi-stage compressor, the first line or conduit extending from the second compression section of the multi-stage compressor to the outlet; a first valve controlling a flow of the stream of gas to the second compression section of the multi-stage compressor; a second valve controlling a flow of the stream of gas between the first line or conduit and the second line or conduit; a third valve controlling a flow of the stream of gas between the first compression section and the outlet; and a third line or conduit connecting the first line or conduit and the second line or conduit, the third line or conduit being located downstream of the first compression section and the first valve, and upstream of the second compression section and the third valve, the second valve being positioned along the third line or conduit; wherein a first operating mode for a gas processing system is switched to a second operating mode by opening and closing one or more of the valves controlling a flow of the natural gas stream to the first compressor section and the second compressor section

An aspect relates to a gas processing and management system comprising such a multi-stage compressor.

An aspect relates to a method for switching between a first operating mode to a second operating mode in a gas processing system including a multi-stage compressor, a first valve, a second valve, and a third valve, the method comprising: closing the first valve and the third valve while opening the second valve so that a stream of natural gas flows from an inlet to a first compressor section of the multi-stage compressor and then to a second compressor section of the multi-stage compressor in series operation after compression by the first compressor section, and opening the first valve and the third valve while closing the second valve so that the stream of natural gas flows from the inlet to the first compressor section and to the second compressor section in parallel operation.

An aspect relates to a parallel/series compressor switching system and method.

An aspect relates to a gas processing and management of different operating modes.

The foregoing and other features of construction and operation will be more readily understood and fully appreciated from the following detailed disclosure, taken in conjunction with accompanying drawings.

### BRIEF DESCRIPTION OF THE DRAWINGS

Some of the embodiments will be described in detail, with reference to the following figures, wherein like designations denote like members, wherein:
FIG. 1 depicts a schematic view of a gas processing system in a first operating mode, in accordance with embodiments of the present invention;
FIG. 2 depicts a schematic view of a gas processing system in a second operating mode, in accordance with embodiments of the present invention; and
FIG. 3 depicts a perspective view of a compressor unit having multi-stages of compression for operating in a first operating mode and a second operating mode, in accordance with embodiments of the present invention.

### DETAILED DESCRIPTION

A detailed description of the hereinafter described embodiments of the disclosed apparatus, method, and system are presented herein by way of exemplification and not limitation with reference to the Figures. Although certain embodiments are shown and described in detail, it should be understood that various changes and modifications may be made without departing from the scope of the appended claims. The scope of the present disclosure will in no way be limited to the number of constituting components, the materials thereof, the shapes thereof, the relative arrangement thereof, etc., and are disclosed simply as an example of embodiments of the present disclosure.

As a preface to the detailed description, it should be noted that, as used in this specification and the appended claims, the singular forms "a", "an" and "the" include plural referents, unless the context clearly dictates otherwise.

Current methods and systems for ethane recovery and ethane rejection require different modes of operation (i.e. recovery mode and rejection mode). The recovery mode currently uses a two stage compressor that receives the natural gas for compression and recovery of ethane from the natural gas stream, while the rejection mode uses a different type of compressor, such as a single stage compressor that receives the natural gas for compression and rejection or non-recovery of ethane gas. Switching between operating modes (i.e. between recovery and reject) requires either two independent compressors or significant modifications to a single existing compressor in the system. The modifications of a single compressor system are time consuming and expensive, typically requiring a service engineer to tear down the machine and change several components. Thus, a need exists for switching between operating modes by avoiding significant modifications to existing compressors.

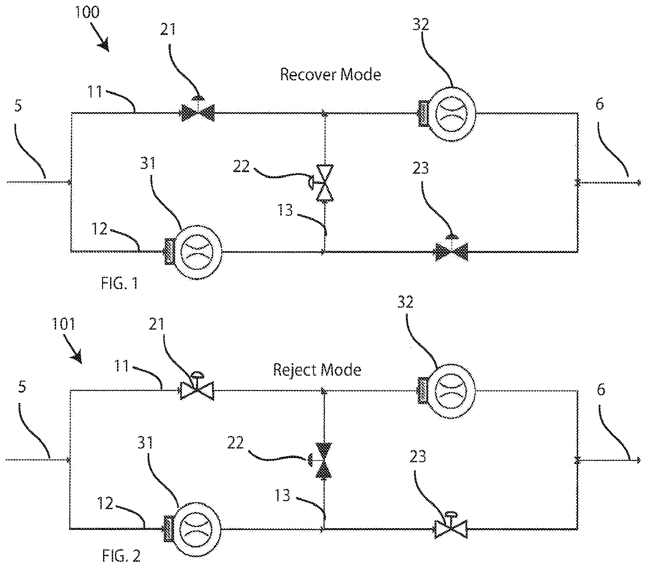

FIG. 1 depicts a system 100 for a first operating mode of gas processing system 100. In an exemplary embodiment, the first operating mode of the gas processing system 100 is an ethane recovery operating mode. Embodiments of the system 100 may include an inlet 5, which contains or otherwise receives a natural gas stream, a first line or conduit 11, a second line or conduit 12, a third line or conduit 13, a first valve 21, a second valve 22, a third valve 23, a first compressor section 31, a second compressor section 32, and an outlet 6 for continued processing/carrying of the natural gas stream for recovery of ethane from the processed stream. Embodiments of the first compressor section 31 and the second compressor section 32 may each be a single stage compressor, or may be stages of a multi-stage compressor. Each compression section may have an inlet guide vane or an inlet throttle valve, or other flow controlling device. If the process is stable enough, the second section of compression may not need an additional throttling device. Further, valves 21, 22, 23 may be manual or automated, and blind flanges may also be suitable for proper isolation. Embodiments of the valves 21, 22, 23 may be an isolation valve, such as a gate valve, butterfly valve, ball valve, globe valve, and the like, or may be a blind flange.

In the first operating mode of system 100, the first valve 21 may be in a closed position, such that the natural gas flows from the inlet 5 to the first compressor section 31 via line 12. The first compressor section 31 may compress the natural gas stream, for example, as a first stage of compression. Further, embodiments of the third valve 23 may be in a closed position, such that the compressed stream flows from first compressor section 31 via line 12 and into line 13, which may connect lines 11 and 12. For example, the third valve 22 may be positioned along line 13, and may be positioned downstream of the first compressor section 31 and upstream of the second compressor section 32. The compressed stream may flow through line 13 and then to the second compressor section 32 via a portion of line 11. The second compressor section 32 may further compress the natural gas stream, for example, as a second stage of compression. The further compressed stream may exit via outlet 6 for further processing, such as a recovery of ethane. The configuration of system 100 results in a low flow, high pressure ratio for better recovery of ethane from the stream leaving outlet 6. Furthermore, the recovery mode may be achieved without modifying the compressor sections 31, 32 of a compressor unit. Embodiments of the system 100 representing a recovery mode may include the first compressor section 31 and the second compressor section 32 in a series operation. Embodiments of lines 11, 12, 13 may be a pipe, a line, a connection, a fluidic connection, and the like.

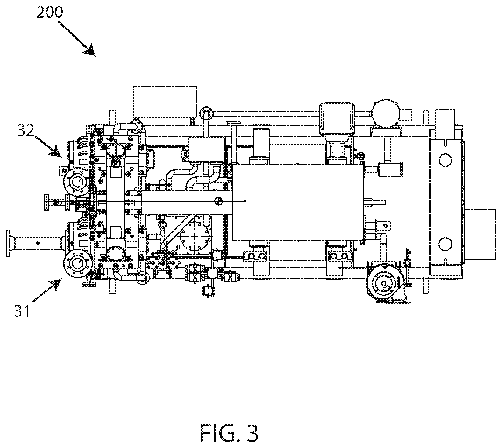

FIG. 2 depicts a gas processing system 101 for a second operating mode. In an exemplary embodiment, the second operating mode is an ethane rejection operating mode. Embodiments of the system 101 may include the same compressor or compressor unit of system 100. For instance, embodiments of the system 100 may include an inlet 5, which contains a natural gas stream, a first line or conduit 11, a second line or conduit 12, a third line or conduit 13, a first valve 21, a second valve 22, a third valve 23, a first compressor section 31, a second compressor section 32, and an outlet 6 for continued processing/carrying of the natural gas stream. Embodiments of the first compressor section 31 and the second compressor section 32 may each be a single stage compressor, or a compression stage of a multi-stage compressor. Each compression section may have an inlet guide vane or an inlet throttle valve, or other flow controlling device. If the process is stable enough, the second section of compression may not need an additional throttling device. Further, valves 21, 22, 23 may be manual or automated, and blind flanges may also be suitable for proper isolation. In the second operating mode of system 101, the first valve 21 may be in an open position, such that the natural gas stream is split or otherwise distributed to flow from the inlet 5 to the first compressor section 31 via line 12, and to the second compressor section 32. The second valve 22 may be in a closed position. The second valve 22 being in the closed position may prevent the compressed gas exiting from the first compressor section 31 to enter line 11 and into the second compression section 32. The third valve 23 may be in an open position to allow the compressed stream from the first compressor section 31 to flow to the outlet 6. The compressed stream from the second compressor section 32 via line 11 to the outlet 6. The configuration of system 101 may result in an increased volume of flow and a reduced pressure ratio, which may be ideal for ethane rejection. Furthermore, switching from the recovery operating mode to the reject operating mode may be achieved without modifying the compressor sections 31, 32 or the compressor unit. Embodiments of the system 101 representing a reject mode may include the first compressor section 31 and the second compressor section 32 in a parallel operation. FIG. 3 depicts a perspective view of a compressor unit 200 having multi-stages of compression for operating in two different operating modes, such as a recovery and a rejection mode of ethane or other gases, in accordance with embodiments of the present invention. Embodiments of the compressor unit 200 may be a compressor, a compressor unit, a multi-stage compressor, and the like, capable of compressing natural gas and performing ethane recovery and ethane rejections modes of operation. In an exemplary embodiment, the compressor 200 may be a centrifugal compressor. In other exemplary embodiments, the compressor 200 may be a dynamic compressor, such as a centrifugal compressor, an axial compressor, a positive displacement compressor, such as a reciprocating compressor, a screw compressor, and the like. Embodiments of the compressor 200 may include multi-stages of compression, including the first compression section 31 and the second compression section 32. The compression sections 31, 32, and potential additional stages of compression of the compressor 200 may be connected via piping or other flow path structure. Further, embodiments of the compression sections 31, 32 may each include one or more stages of compression, wherein the one or more stages of compression include at least one of: a dynamic compressor and a positive displacement compressor.

Accordingly, embodiments of compressor 200 may switch between operating modes (e.g. first operating mode and second operating mode) by controlling one or more valves 21, 22, 23. In an exemplary embodiment, the compressor 200 may switch between an ethane recovery mode, as shown in system 100, to an ethane rejection mode, as shown in system 101, by controlling one or more valves 21, 22, 23. Opening and closing valves 21, 22, 23 as described above is significantly less intensive than requiring an existing compressor to be disassembled for replacement of key components of the compressor. Other operating modes may be utilized using the compressor 200 consistent with systems 100, 101. For example, other gases may be rejected and recovered using the compressor 200 in view of systems 100, 101.

Referring to FIGs. 1-3, a method for switching between a first operating mode and a second operating mode (e.g. between an ethane recovery mode to an ethane rejection mode) in a gas processing system 100, 101 including a multi-stage compressor 200, a first valve 21, a second valve 22, and a third valve 23, may include the steps of closing the first valve 21 and the third valve 23 so that a stream of natural gas may flow from an inlet 5 to a first compressor section 31 of the multi-stage compressor 200 and then to a second compressor section 32 of the multi-stage compressor 200 in series operation after compression by the first compressor section 31. In some embodiments, the closing of the first valve 21 and the third valve 23 may cause ethane contained within the stream of natural gas to be recovered by the gas processing system that includes system100. During this step, the second valve 22 may be opened. The method may also include the step of opening the first valve 21 and the third valve 23 so that the stream of natural gas may flow from the inlet 5 to the first compressor section 31 and to the second compressor section 32 in parallel operation. In some embodiments, the opening of the first valve 21 and the third valve 23 may cause ethane contained within the stream of natural gas to be rejected by the gas processing system that includes system 101. During this step, the second valve 22 may be closed. The operating of the valves 21, 22, 23, such as the opening and closing of the valves may be performed automatically by a computer system, control system, controller, etc. In an alternative embodiment, the valves 21, 22, 23 may be opened and closed manually.

While this disclosure has been described in conjunction with the specific embodiments outlined above, it is evident that many alternatives, modifications and variations will be apparent to those skilled in the art. Accordingly, the preferred embodiments of the present disclosure as set forth above are intended to be illustrative, not limiting. Various changes may be made without departing from the scope of the invention, as required by the following claims. The claims provide the scope of the coverage of the invention and should not be limited to the specific examples provided herein.

## Claims

1. A multi-stage compressor, comprising:
a first compressor section (31); and
a second compressor section (32);
an inlet (5) receiving a stream of gas containing an ethane gas;
a second line or conduit (12) fluidically connected to the inlet (5), the second line or conduit (12) extending from the inlet (5) to the first compression section (31) of the multi-stage compressor; the second line or conduit (12) extending from the first compressor section (31) of the multi-stage compressor to an outlet (6);
a first line or conduit (11) fluidically connected to the inlet (5), the first line or conduit (11) extending from the inlet (5) to the second compression section (32) of the multi-stage compressor, the first line or conduit (11) extending from the second compression section (32) of the multi-stage compressor to the outlet (6);
a first valve (21) controlling a flow of the stream of gas to the second compression section (32) of the multi-stage compressor;
a second valve (22) controlling a flow of the stream of gas between the first line or conduit (11) and the second line or conduit (12);
a third valve (23) controlling a flow of the stream of gas between the first compression section (31) and the outlet (6); **characterized in that**
a third line or conduit (13) connects the first line or conduit (11) and the second line or conduit (12), the third line or conduit (13) being located downstream of the first compression section (31) and the first valve (21), and upstream of the second compression section (32) and the third valve (23), the second valve (22) being positioned along the third line or conduit (13);
wherein a first operating mode for a gas processing system is switched to a second operating mode by opening and closing one or more of the valves (21, 22, 23) controlling a flow of the gas stream to the first compressor section (31) and the second compressor section (32).

2. The compressor of claim 1, wherein the first operating mode is for recovering ethane from a gas stream, and the second operating mode is for non-recovery of ethane from the gas stream.

3. The compressor of claim 1, wherein the first compressor section (31) and the second compressor section (32) each include one or more stages of compression.

4. The compressor of claim 1, wherein the first compressor section (31) operates in series with the second compressor section (32) in the first operating mode.

5. The compressor of claim 1, wherein the first compressor section (31) operates in parallel with the second compressor section (32) in the second operating mode .

6. A gas processing and management system **characterized in that** it comprises:
a multi-stage compressor according to claim 1.

7. The gas processing and management system of claim 6, wherein, in an ethane recovery mode, the first valve (21) is in a closed position, the second valve (22) is in an open position, and the third valve (23) is in a closed position.

8. The gas processing and management system of claim 7, wherein the first compression section (31) and the second compression section (32) operate in series in the ethane recovery mode.

9. The gas processing and management system of claim 6, wherein, in a ethane rejection mode, the first valve (21) is in an open position, the second valve (22) is in a closed position, and the third valve (23) is in an open position.

10. The gas processing and management system of claim 9, wherein the first compression section (31) and the second compression section (32) operate in parallel in the ethane rejection mode.

11. A method for switching between a first operating mode to a second operating mode in a gas processing system (100, 101) including a multi-stage compressor, a first valve (21), a second valve (22), and a third valve (23), **characterized in that** the method comprises:
closing the first valve (21) and the third valve (23) while opening the second valve (22) so that a stream of gas flows from an inlet (5) to a first compressor section (31) of the multi-stage compressor and then to a second compressor section (32) of the multi-stage compressor in series operation after compression by the first compressor section (31); and
opening the first valve (21) and the third valve (23) while closing the second valve (22) so that the stream of gas flows from the inlet (5) to the first compressor section (31) and to the second compressor section (32) in parallel operation.

12. The method of claim 11, wherein the first operating mode is an ethane gas recovery mode and the second operating mode is an ethane rejection mode.

13. The method of claim 11, wherein closing the first valve (21) and the third valve (23) while opening the second valve (22) causes an ethane gas contained within the stream of gas to be recovered.

14. The method of claim 11, wherein opening the first valve (21) and the third valve (23) while closing the second valve (22) causes an ethane gas contained within the stream of gas to be rejected.

## Patentansprüche

1. Mehrstufiger Kompressor, umfassend:
einen ersten Kompressorabschnitt (31); und
einen zweiten Kompressorabschnitt (32);
einen Einlass (5), der einen Gasstrom aufnimmt, der ein Ethangas enthält;
eine zweite Leitung oder Verbindung (12) in Fluidverbindung mit dem Einlass (5), wobei sich die zweite Leitung oder Verbindung (12) von dem Einlass (5) zu dem ersten Kompressionsabschnitt (31) des mehrstufigen Kompressors erstreckt; wobei sich die zweite Leitung oder Verbindung (12) von dem ersten Kompressorabschnitt (31) des mehrstufigen Kompressors zu einem Auslass (6) erstreckt;
eine erste Leitung oder Verbindung (11) in Fluidverbindung mit dem Einlass (5), wobei sich die erste Leitung oder Verbindung (11) von dem Einlass (5) zu dem zweiten Kompressionsabschnitt (32) des mehrstufigen Kompressors erstreckt; wobei sich die erste Leitung oder Verbindung (11) von dem zweiten Kompressionsabschnitt (32) des mehrstufigen Kompressors zu dem Auslass (6) erstreckt;
ein erstes Ventil (21), das einen Fluss des Gasstroms zu dem zweiten Kompressionsabschnitt (32) des mehrstufigen Kompressors steuert;
ein zweites Ventil (22), das einen Fluss des Gasstroms zwischen der ersten Leitung oder Verbindung (11) und der zweiten Leitung oder Verbindung (12) steuert;
ein drittes Ventil (23), das einen Fluss des Gasstroms zwischen dem ersten Kompressionsabschnitt (31) und dem Auslass (6) steuert; **dadurch gekennzeichnet, dass**
eine dritte Leitung oder Verbindung (13) die erste Leitung oder Verbindung (11) und die zweite Leitung oder Verbindung (12) verbindet, wobei die dritte Leitung oder Verbindung (13) stromabwärts des ersten Kompressionsabschnitts (31) und des ersten Ventils (21) und stromaufwärts des zweiten Kompressionsabschnitts (32) und des dritten Ventils (23) angeordnet ist, wobei das zweite Ventil (22) entlang der dritten Leitung oder Verbindung (13) positioniert ist;
wobei ein erster Betriebsmodus für ein Gasverarbeitungssystem zu einem zweiten Betriebsmodus umgeschaltet wird, indem eines oder mehrere der Ventile (21, 22, 23) geöffnet und geschlossen wird/werden, sodass ein Fluss des Gasstroms zu dem ersten Kompressorabschnitt (31) und dem zweiten Kompressorabschnitt (32) gesteuert wird.

2. Kompressor nach Anspruch 1, wobei der erste Betriebsmodus zum Rückgewinnen von Ethan aus einem Gasstrom dient und der zweite Betriebsmodus zum Nicht-Rückgewinnen von Ethan aus dem Gasstrom dient.

3. Kompressor nach Anspruch 1, wobei der erste Kompressorabschnitt (31) und der zweite Kompressorabschnitt (32) jeweils eine oder mehrere Kompressionsstufen aufweisen.

4. Kompressor nach Anspruch 1, wobei in dem ersten Betriebsmodus der erste Kompressorabschnitt (31) in Reihe mit dem zweiten Kompressorabschnitt (32) betrieben wird.

5. Kompressor nach Anspruch 1, wobei in dem zweiten Betriebsmodus der erste Kompressorabschnitt (31) parallel mit dem zweiten Kompressorabschnitt (32) betrieben wird.

6. Gasverarbeitungs- und -verwaltungssystem, **dadurch gekennzeichnet, dass** es umfasst:
einen mehrstufigen Kompressor nach Anspruch 1.

7. Gasverarbeitungs- und -verwaltungssystem nach Anspruch 6, wobei in einem Ethanrückgewinnungsmodus sich das erste Ventil (21) in einer geschlossenen Stellung befindet, das zweite Ventil (22) in einer geöffneten Stellung befindet und das dritte Ventil (23) in einer geschlossenen Stellung befindet.

8. Gasverarbeitungs- und -verwaltungssystem nach Anspruch 7, wobei in dem Ethanrückgewinnungsmodus der erste Kompressionsabschnitt (31) in Reihe mit dem zweiten Kompressionsabschnitt (32) betrieben wird.

9. Gasverarbeitungs- und -verwaltungssystem nach Anspruch 6, wobei in einem Ethanzurückweisungsmodus sich das erste Ventil (21) in einer geöffneten Stellung befindet, das zweite Ventil (22) in einer geschlossenen Stellung befindet und das dritte Ventil (23) in einer geöffneten Stellung befindet.

10. Gasverarbeitungs- und -verwaltungssystem nach Anspruch 9, wobei in dem Ethanzurückweisungsmodus der erste Kompressionsabschnitt (31) parallel mit dem zweiten Kompressionsabschnitt (32) betrieben wird.

11. Verfahren zum Umschalten zwischen einem ersten Betriebsmodus zu einem zweiten Betriebsmodus in einem Gasverarbeitungssystem (100, 101), das einen mehrstufigen Kompressor, ein erstes Ventil (21), ein zweites Ventil (22) und ein drittes Ventil (23) aufweist, **dadurch gekennzeichnet, dass** das Verfahren umfasst:
Schließen des ersten Ventils (21) und des dritten Ventils (23), während das zweite Ventil (22) geöffnet wird, sodass ein Gasstrom von einem Einlass (5) zu einem ersten Kompressorabschnitt (31) des mehrstufigen Kompressors strömt, und dann zu einem zweiten Kompressorabschnitt (32) des mehrstufigen Kompressors in Reihenbetrieb nach Kompression durch den ersten Kompressorabschnitt (31); und
Öffnen des ersten Ventils (21) und des dritten Ventils (23), während das zweite Ventil (22) geschlossen wird, sodass der Gasstrom von dem Einlass (5) zu dem ersten Kompressorabschnitt (31) und zu dem zweiten Kompressorabschnitt (32) in Parallelbetrieb strömt.

12. Verfahren nach Anspruch 11, wobei der erste Betriebsmodus ein Ethangasrückgewinnungsmodus ist und der zweite Betriebsmodus ein Ethanzurückweisungsmodus ist.

13. Verfahren nach Anspruch 11, wobei ein Schließen des ersten Ventils (21) und des dritten Ventils (23), während das zweite Ventil (22) geöffnet wird, bewirkt, dass ein in dem Gasstrom enthaltenes Ethangas rückgewonnen wird.

14. Verfahren nach Anspruch 11, wobei ein Öffnen des ersten Ventils (21) und des dritten Ventils (23), während das zweite Ventil (22) geschlossen wird, bewirkt, dass ein in dem Gasstrom enthaltenes Ethangas zurückgewiesen wird.

## Revendications

1. Compresseur à étages multiples, qui comprend :
un premier tronçon de compresseur (31) ; et
un deuxième tronçon de compresseur (32) ;
une entrée (5) qui reçoit un courant de gaz contenant un gaz d'éthane ;
une deuxième ligne ou un deuxième conduit (12) qui est relié par fluide à l'entrée (5), la deuxième ligne ou le deuxième conduit (12) s'étendant à partir de l'entrée (5) jusqu'au premier tronçon de compression (31) du compresseur à étages multiples, la deuxième ligne ou le deuxième conduit (12) s'étendant à partir du premier tronçon de compresseur (31) du compresseur à étages multiples jusqu'à une sortie (6) ;
une première ligne ou un premier conduit (11) qui est relié par fluide à l'entrée (5), la première ligne ou le premier conduit (11) s'étendant à partir de l'entrée (5) jusqu'au deuxième tronçon de compression (32) du compresseur à étages multiples, la première ligne ou le premier conduit (11) s'étendant à partir du deuxième tronçon de compression (32) du compresseur à étages multiples jusqu'à la sortie (6) ;
une première soupape (21) qui règle un écoulement du courant de gaz dans la direction du deuxième tronçon de compression (32) du compresseur à étages multiples ;
une deuxième soupape (22) qui règle un écoulement du courant de gaz entre la première ligne ou le premier conduit (11) et la deuxième ligne ou le deuxième conduit (12) ;
une troisième soupape (23) qui règle un écoulement du courant de gaz entre le premier tronçon de compression (31) et la sortie (6) ;
**caractérisé en ce que**
une troisième ligne ou un troisième conduit (13) relie la première ligne ou le premier conduit (11) et la deuxième ligne ou le deuxième conduit (12), la troisième ligne ou le troisième conduit (13) étant situé en aval par rapport au premier tronçon de compression (31) et à la première soupape (21), et en amont par rapport au deuxième tronçon de compression (32) et à la troisième soupape (23), la deuxième soupape (22) étant disposée le long de la troisième ligne ou du troisième conduit (13) ;
dans lequel on passe par commutation d'un premier mode de fonctionnement pour un système de traitement de gaz à un deuxième mode de fonctionnement par l'intermédiaire de l'ouverture et de la fermeture d'une ou de plusieurs soupapes parmi les soupapes (21, 22, 23) qui règlent un écoulement du courant de gaz dans la direction du premier tronçon de compresseur (31) et du deuxième tronçon de compresseur (32).

2. Compresseur selon la revendication 1, dans lequel le premier mode de fonctionnement est destiné à la récupération d'éthane à partir d'un courant de gaz, et le deuxième mode de fonctionnement est destiné à une non récupération d'éthane à partir du courant de gaz.

3. Compresseur selon la revendication 1, dans lequel le premier tronçon de compresseur (31) et le deuxième tronçon de compresseur (32) englobent chacun un ou plusieurs étages de compression.

4. Compresseur selon la revendication 1, dans lequel le premier tronçon de compresseur (31) travaille en série avec le deuxième tronçon de compresseur (32) dans le premier mode de fonctionnement.

5. Compresseur selon la revendication 1, dans lequel le premier tronçon de compresseur (31) travaille en parallèle avec le deuxième tronçon de compresseur (32) dans le deuxième mode de fonctionnement.

6. Système de gestion et de traitement de gaz **caractérisé en ce qu'**il comprend :
un compresseur à étages multiples en conformité avec la revendication 1.

7. Système de gestion et de traitement de gaz selon la revendication 6, dans lequel, dans un mode de récupération d'éthane, la première soupape (21) se trouve dans une position fermée, la deuxième soupape (22) se trouve dans une position ouverte et la troisième soupape (23) se trouve dans une position fermée.

8. Système de gestion et de traitement de gaz selon la revendication 7, dans lequel le premier tronçon de compression (31) et le deuxième tronçon de compression (32) travaillent en série dans le mode de récupération d'éthane.

9. Système de gestion et de traitement de gaz selon la revendication 6, dans lequel, dans un mode de rejet d'éthane, la première soupape (21) se trouve dans une position ouverte, la deuxième soupape (22) se trouve dans une position fermée et la troisième soupape (23) se trouve dans une position ouverte.

10. Système de gestion et de traitement de gaz selon la revendication 9, dans lequel le premier tronçon de compression (31) et le deuxième tronçon de compression (32) travaillent en parallèle dans le mode de rejet d'éthane.

11. Procédé destiné au passage par commutation d'un premier mode de fonctionnement à un deuxième mode de fonctionnement dans un système de traitement de gaz (100, 101), qui englobe un compresseur à étages multiples, une première soupape (21), une deuxième soupape (22) et une troisième soupape (23), **caractérisé en ce que** le procédé comprend le fait de :
fermer la première soupape (21) et la troisième soupape (23) tout en ouvrant la deuxième soupape (22) d'une manière telle qu'un courant de gaz s'écoule à partir d'une entrée (5) dans la direction d'un premier tronçon de compresseur (31) du compresseur à étages multiples et ensuite dans la direction d'un deuxième tronçon de compresseur (32) du compresseur à étages multiples dans un fonctionnement en série après une compression par l'intermédiaire du premier tronçon de compresseur (31) ; et
ouvrir la première soupape (21) et la troisième soupape (23) tout en fermant la deuxième soupape (22) d'une manière telle que le courant de gaz s'écoule à partir de l'entrée (5) dans la direction du premier tronçon de compresseur (31) et dans la direction du deuxième tronçon de compresseur (32) dans un fonctionnement en parallèle.

12. Procédé selon la revendication 11, dans lequel le premier mode de fonctionnement est un mode de récupération de gaz d'éthane et le deuxième mode de fonctionnement est un mode de rejet d'éthane.

13. Procédé selon la revendication 11, dans lequel le fait de fermer la première soupape (21) et la troisième soupape (23) tout en ouvrant la deuxième soupape (22) entraîne une récupération du gaz d'éthane qui est contenu dans le courant de gaz.

14. Procédé selon la revendication 11, dans lequel le fait d'ouvrir la première soupape (21) et la troisième soupape (23) tout en fermant la deuxième soupape (22) entraîne un rejet du gaz d'éthane qui est contenu dans le courant de gaz.
